# EUROPEAN PATENT APPLICATION

(11) **EP 4 621 887 A2**
(43) Date of publication of application: **24.09.2025**
(21) Application number: 25164699.8
(22) Date of filing: 19.03.2025
(51) Int. Cl.: H01M 4/66, H01M 4/70, H01M 10/0585, H01M 4/13

(54) **ELECTRODE PLATE, ELECTRODE ASSEMBLY AND RECHARGEABLE BATTERY INCLUDING THE SAME**

(30) Priority: 19.03.2024 KR 20240037807
(71) Applicant: SAMSUNG SDI CO., LTD., Yongin-si, Gyeonggi-do 17084 (KR)
(72) Inventor: LEE, Jeawoan, Gyeonggi-do 17084 (KR)
(74) Representative: Maiwald GmbH

(57) **Abstract**

An electrode plate includes a substrate including a base layer and a first conductive layer and a second conductive layer disposed on respective surfaces of the base layer. An active material layer is disposed on at least one surface of the substrate. At least one incised portion of the first conductive layer, resulting from incision of a portion of the first conductive layer that penetrates the base layer, is contacted with the second conductive layer.

## Description

### FIELD

The present disclosure relates to an electrode plate, an electrode assembly, and a rechargeable battery including the same.

### BACKGROUND

Rechargeable batteries may be manufactured in various shapes. Among these, pouch batteries may include an electrode assembly with a separator, an insulator, between a positive electrode plate and a negative electrode plate, and a thin flexible pouch with the electrode assembly built in. The pouch may accommodate the electrode assembly in the inner space.

The electrode assembly of the rechargeable battery may be largely divided into a winding type and a stacking type depending on its structure. Based on its structural safety and spatial utility, the stacking type may be widely applied to small and medium-to-large sizes. The stacking type rechargeable battery may be a stack of electrode plates and separators.

The substrate used for the electrodes of the rechargeable battery, specifically, the positive electrode and negative electrode, the current collecting layer, may usually be a thin film of electrical conductivity such as copper, aluminum, nickel, or stainless steel (SUS). For example, in the case of a commercially available lithium ion battery, a copper foil current collecting layer may be used for the negative electrode and an aluminum foil current collecting layer may be used for the positive electrode.

Recently, to lower manufacturing costs and reduce weights of the rechargeable batteries, the entire current collecting layer is not manufactured only with metal such as copper or aluminum, but a composite substrate with a metal layer applied to both sides of the polymer layer may also be applied.

The composite substrate may have a metal layer disposed on both sides of the polymer layer, and the polymer layer may have low conductivity. Thus, the metal layers on both sides may not have electrical conductivity with each other.

### SUMMARY

One or more embodiments provide an electrode plate for realizing electrical conductivity between adjacent electrode plates, an electrode assembly, and a rechargeable battery including the same.

According to one or more embodiments, an electrode plate includes a substrate including a base layer and a first conductive layer and a second conductive layer disposed on the respective surfaces of the base layer. An active material layer is disposed on at least one surface of the substrate. At least one incised portion of the first conductive layer, resulting from incision of a portion of the first conductive layer that penetrates the base layer, is contacted with a second conductive layer.

The substrate may include a current collector having at least one surface on which the active material layer is disposed, and an uncoated region, in which the incision is disposed, extending from the current collector.

The incision may be disposed near the current collector in the uncoated region.

The base layer may include polyethylene terephthalate (PET).

The base layer may include at least one of polyamide, polyimide, polybutylene terephthalate, polyethylene naphthalate, polycarbonate, polyethylene, polypropylene, polyethylene propylene, acrylonitrile-butadiene-styrene copolymer, polyvinyl alcohol, polystyrene, poly vinyl chloride, polyvinylidene fluoride, polytetrafluoroethylene, polystyrene sulfonate sodium, polyacetylene, silicon rubber, polyoxy methylene, polyphenylene ether, polyphenylene sulfide, polyethylene glycol, poly(sulfur nitride), polyphenylene, polypyrrole, polyaniline, polythiophene, polypyridine, cellulose, starch, protein, epoxy resin, phenol resin, derivatives of the above-noted materials, crosslinked compounds of the above-noted materials, and copolymers of the above-noted materials.

The base layer may further include an additive, and the additive may include at least one of a metal material or an inorganic non-metallic material.

The first conductive layer and the second conductive layer may include aluminum.

The first conductive layer and the second conductive layer may include at least one of a metal material, a carbon-based conductive material, and a conductive polymer material.

According to one or more embodiments, an electrode assembly includes electrode plates and a separator. The electrode plates are stacked with the separator therebetween. The electrode plates respectively include a substrate including a base layer and a first conductive layer and a second conductive layer disposed on respective sides of the base layer. An active material layer is disposed on at least a portion of the substrate. At least one incision in a portion of the first conductive layer penetrates the base layer, and an incised portion of the first conductive layer resulting from the incision is contacted to the second conductive layer.

The substrate may include a current collector having at least one surface on which the active material layer is disposed, and an uncoated region, in which the incision is disposed, extending to an outside from the current collector.

The incision may be disposed near the current collector in the uncoated region.

The electrode plates may include a first electrode plate and a second electrode plate.

The electrode plates may include two or more of the first electrode plate and two or more of the second electrode plate. Uncoated regions of the two or more of the first electrode plates and the two or more of the second electrode plates are respectively combined with each other in a top-down direction.

The base layer may include polyethylene terephthalate (PET).

The base layer may include at least one of polyamide, polyimide, polybutylene terephthalate, polyethylene naphthalate, polycarbonate, polyethylene, polypropylene, polyethylene propylene, acrylonitrile-butadiene-styrene copolymer, polyvinyl alcohol, polystyrene, poly vinyl chloride, polyvinylidene fluoride, polytetrafluoroethylene, polystyrene sulfonate sodium, polyacetylene, silicon rubber, polyoxy methylene, polyphenylene ether, polyphenylene sulfide, polyethylene glycol, poly(sulfur nitride), polyphenylene, polypyrrole, polyaniline, polythiophene, polypyridine, cellulose, starch, protein, epoxy resin, phenol resin, derivatives of the above-noted materials, crosslinked compounds of the above-noted materials, and copolymers of the above-noted materials.

The base layer may further include an additive, and the additive includes at least one of a metal material and an inorganic non-metallic material.

The first conductive layer and the second conductive layer may include aluminum.

The first conductive layer and the second conductive layer may include at least one of a metal material, a carbon-based conductive material, and a conductive polymer material.

One or more embodiments provide a rechargeable battery including an electrode assembly and a case for receiving the electrode assembly.

According to some embodiments, electrode plates included in the electrode assembly may include a substrate in which an incision of the first conductive layer results in an incised portion of the first conductive layer that is contacted with the second conductive layer. Hence, the respective surfaces of the substrate may be electrically connected to each other so that the entire electrode assembly may be electrically connected by combining the substrates.

In this way, the electrode assembly according to one or more embodiments may not need to perform an electrical conducting process that requires additional folding of foils and inserting them one by one between electrode plates as in the prior art. Therefore, the manufacturing time may be shortened, the manufactured process is less complicated as it involves less steps and the manufacturing cost may also be reduced.

### BRIEF DESCRIPTION OF THE DRAWINGS

The following drawings appended to the specification illustrate embodiments of the present disclosure, and further describe aspects and features of the present disclosure together with the detailed description of the present disclosure. Thus, the present disclosure should not be construed as being limited to the drawings:
FIG. 1 shows a perspective view on a rechargeable battery in which an electrode plate and an electrode assembly including the same may be installed according to one or more embodiments.
FIG. 2 shows a cross-sectional view of electrode plates, according to some embodiments, that are combined to each other.
FIG. 3 shows a perspective view of aspects of an electrode plate of the rechargeable battery of FIG. 1 according to an exemplary embodiment.
FIG. 4 shows a bottom view of the electrode plate of FIG. 3.
FIG. 5 shows a cross-sectional view of a process involved in manufacturing an electrode plate using perforation equipment according to one or more embodiments.
FIG. 6 is a cross-sectional view showing a portion of a first conductive layer that is incised and a base layer that is perforated by perforation equipment according to some embodiments.
FIG. 7 is a cross-sectional view showing an incised portion of a first conductive layer contacted with a second conductive layer.
FIG. 8 shows a cross-sectional view of a process involved in manufacturing an electrode plate by using perforation equipment according to one or more embodiments.

### DETAILED DESCRIPTION

Embodiments of the present disclosure will be described more fully hereinafter with reference to the accompanying drawings. As those skilled in the art would realize, the described embodiments may be modified in various different ways, all without departing from the spirit of the disclosure or scope of the claims. The drawings and description are to be regarded as illustrative in nature and not restrictive.

If used in the present specification, "comprise and include" and/or "comprising and including" may specify the existence of the mentioned shapes, numbers, steps, operations, members, elements and/or these groups, and may not exclude the presence or addition of one or more other shapes, numbers, movements, members, elements and/or groups.

To aid understanding of the disclosure, the attached drawings may not be drawn to actual scale, but the dimensions of some components may be exaggerated. The same reference number may be assigned to the same component in another embodiment.

The statement that two objects of comparison are 'the same' may mean 'substantially the same'. Therefore, the substantial sameness may include a case, for example, where the deviation is within 5%, which is considered low in the industry. Uniformity of a parameter in a given region may mean uniformity from an average perspective.

Although first, second, etc. are used to describe various components, the components may not be limited by these terms. These terms are only used to distinguish one component from another, and unless specifically stated to the contrary, the first component may also be the second component.

Throughout the specification, unless otherwise stated, each component may be singular or plural.

The placement of any components on a "upper portion (or a lower portion)" of a component or the "top (or bottom)" of a component may mean that any component is placed in contact with the top (or bottom) of the component. This may mean that other configurations may be interposed between and any configuration placed on (or under) the component.

It should be understood that if a component is described as "connected to" or "coupled to" another component, the components may be directly connected or accessed to each other, but other components may be "interposed" between the respective components, or the respective components may be connected, combined, or accessed to each other through other components.

As used herein, the term "contacted" or "in contact" may mean that a first component at least in part adheres to or is abutted to a second component. In case of the first conductive layer that penetrates the base layer and is contacted with the second conductive layer means that at least a portion of the first conductive layer is adhered to or abutted to the second conductive layer, so that the first conductive layer is electrically contacted with the second conductive layer.

As used herein, the term "and/or" includes any and all combinations of one or more of the associated listed items. The use of "may" if describing embodiments of the present disclosure refers to "one or more embodiments of the present disclosure. Expressions such as "one or more" in front of a list of elements may modify the entire list of elements and may not modify individual elements of the list.

If it says "A and/or B" throughout the specification, it may mean A, B or A and B unless there is a special opposing statement, and if it says "C to D" it may mean that it is higher than C and lower than D unless there is a special opposing statement.

If a syntax such as "at least one of A, B, and C", "at least one of A, B, or C", "at least one selected from A, B, and C group" and "at least one selected from A, B and C" is used to specify a list of elements A, B and C, the syntax may refer to any one or more of the elements and all suitable combinations.

The term "use" may be considered synonymous with the term "utilize". As used in the present specification, "substantially," "approximately," and similar terms may be used as terms of approximation rather than terms of degree, taking into account inherent variations in measured or calculated values as would be recognized by a person of ordinary skill in the art.

In the present specification, the terms first, second, third, etc. may be used to describe various elements, components, regions, layers and/or sections, but the elements, components, regions, layers and/or sections may not be limited by these terms. Th terms may be used to distinguish one element, component, region, drawing layer or cross-section from another element, component, region, drawing layer or cross-section. Hence, the first element, component, region, layer or section discussed below may be named a second element, component, region, layer or section without departing from the teachings of the embodiments.

As shown in the drawings, to describe the relationship between one element or feature and other element(s) or feature(s), for ease of description, spatial relative terms such as beneath, below, lower, above, upper, etc. may be used in the present specification. Spatially relative dispositions will be understood to encompass different directions of the device in use or operation in addition to the direction depicted in the figures. For example, if the drawing device is flipped, an element described as "below" or "bottom" another element may be understood to be "above" or "beyond" another element. Therefore, the term "down" may encompass both up and down directions.

The terms used in this specification are intended to describe embodiments of the present disclosure and are not intended to limit the present disclosure.

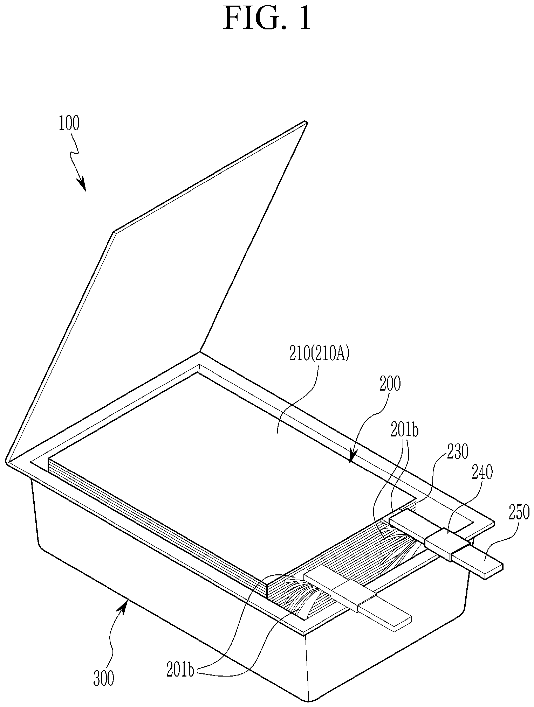

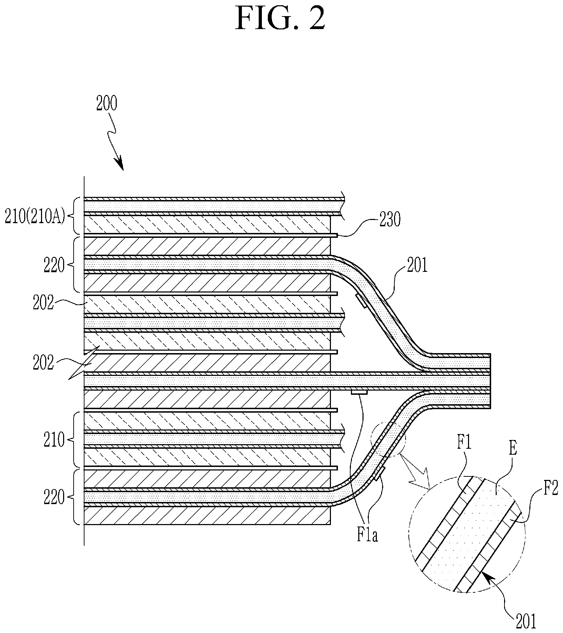

FIG. 1 shows a perspective view on a rechargeable battery 100 in which electrode plates 210, 220 and an electrode assembly 200 including the same may be installed according to one or more embodiments. FIG. 2 shows a cross-sectional view of electrode plates 210, 220 of the electrode assembly 200.

Referring to FIG. 1 and FIG. 2, the rechargeable battery 100 may include an electrode assembly 200 and a case 300.

The electrode assembly 200 may include electrode plates 210 and 220 and a separator 230. The electrode plates 210 and 220 may be referred to as a first electrode plate 210 and a second electrode plate 220 for explanatory purposes.

The electrode assembly 200 may have a form of repeatedly winding or stacking a laminate including the first electrode plate 210, the second electrode plate 220, and the separator 230.

For example, the electrode assembly 200 may be a stacking type in which the electrode plates 210 and 220 are arranged as multiple layers. Alternately, the electrode assembly 200 may be a repeatedly wound jelly-roll type. A stacking type electrode assembly 200 is discussed according to one or more embodiments.

A process for manufacturing the stacking-type electrode assembly 200 may generally involve a primary stacking process and a secondary process.

The primary stacking process may stack a full cathode and a full anode. The full cathode may include the first electrode plates 210 excluding the outermost first electrode plate 210A. The full anode may be the second electrode plates 220.

The secondary stacking process may stack the half cathode on at least one side of respective outermost sides with respect to the stacking direction. The half cathode may be the outermost first electrode plate 210A from among the first electrode plates 210.

FIG. 2 shows the electrode assembly 200 in which the half cathode is stacked on the upper outermost portion of the electrode assembly 200. The half cathode may be stacked on the upper outermost portion (as shown in FIG. 2) or the respective outermost portions of the electrode assembly 200.

The full cathode and the full anode may be made by applying an active material on surfaces of both sides of a substrate 201, and the half cathode may be made by disposing the active material layer on one surface of the substrate 201. Known aspects of the full cathode, full anode, and half cathode are not described in detail.

The separator 230 may be disposed between the first electrode plate 210 and the second electrode plate 220 of each pair. The separator 230 may prevent the first electrode plate 210 and the second electrode plate 220 from being short-circuited, and may allow the lithium ion to move. For this purpose, the separator 230 may be formed to be relatively bigger than the first electrode plate 210 and the second electrode plate 220.

The material of the separator 230 may be polyethylene, polypropylene, or a composite film of the polyethylene and the polypropylene, for example, but the material of the separator 230 is not intended to be limited by the examples.

The separator 230 may be incised by unit lengths and may be arranged between the first electrode plate 210 and the second electrode plate 220 or each pair, or one separator 230 may be in a ribbon shape alternately arranged between the first electrode plate 210 and the second electrode plate 220 of multiple pairs. Alternately, the separator 230 may be wound in one direction between the first electrode plate 210 and the second electrode plate 220.

The disposition of the separator 230 may not be limited to one specific form. For example, according to some embodiments, the separator 230 is incised by unit lengths and arranged between the first electrode plate 210 and the second electrode plate 220.

The case 300 may receive the electrode assembly 200. The electrode assembly 200 may be received in the case 300 together with the electrolyte solution.

The case 300 may be a pouch type, a cylindrical type, or an angular type. External members in a planar shape may be bent to face each other, and the pouch-type case 300 may be manufactured to press or draw a surface and include a recess in the surface.

The electrode assembly 200 may be received in the recess (not shown). A sealing portion may be provided on an exterior circumference of the recess, and the sealing portion may be sealed by a method such as thermal fusion after the electrode assembly 200 is received in the recess.

Regarding the electrode plates 210, 220, the first electrode plate 210 may be a negative electrode, and the second electrode plate 220 may be a positive electrode, and vice versa. The first electrode plate 210 and the second electrode plate 220 may be electrically connected to an outside of the rechargeable battery 100 through a strip terminal 250.

An insulation tape 240 may be attached to a portion of the strip terminal 250 contacting the case 300. The insulation tape 240 may prevent the strip terminal 250 from electrically conducting to the case 300.

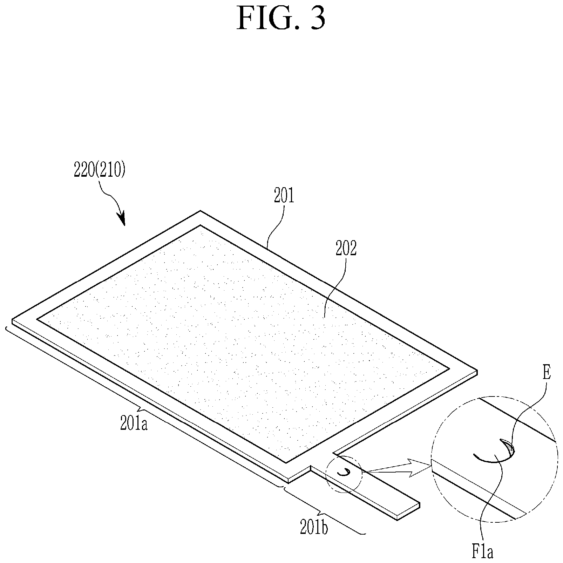

FIG. 2 shows a cross-sectional view of aspects of an electrode assembly according to some embodiments. FIG. 3 shows a perspective view on an electrode plate 210/220 such as one of the electrode plates 210/220 of the rechargeable battery 100 of FIG. 1.

Referring to FIG. 2 and FIG. 3, the electrode assembly 200 according to some embodiments may include the electrode plates 210 and 220, and the electrode plates 210 and 220 may respectively include the substrate 201 and an active material layer 202 arranged on portions of the substrate 201. The active material layer 202 may include an active material, a conductive material, and a binder.

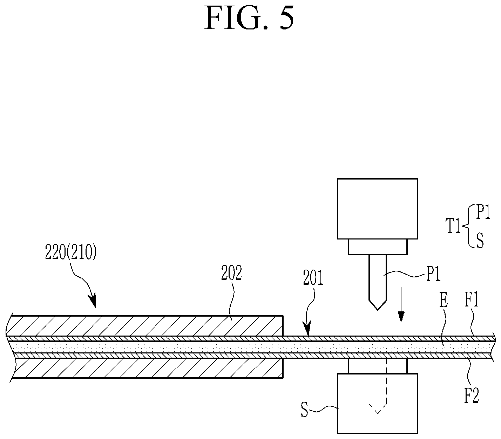

The substrate 201 may include a base layer E, and a first conductive layer F1 and a second conductive layer F2 (FIG. 5) disposed above/below the base layer E with reference to an internal configuration.

The base layer E may, for example, include polyethylene terephthalate (PET).

Alternately, the base layer E may, for example, include at least one of polyamide, polyimide, polybutylene terephthalate, polyethylene naphthalate, polycarbonate, polyethylene, polypropylene, polyethylene propylene, acrylonitrile-butadiene-styrene copolymer, polyvinyl alcohol, polystyrene, poly chloride vinyl, polyvinylidene fluoride, polytetrafluoroethylene, polystyrene sulfonate sodium, polyacetylene, silicon rubber, polyoxymethylene, polyphenylene ether, polyphenylene sulfide, polyethylene glycol, poly(sulfur nitride), polyphenylene, polypyrrole, polyaniline, polythiophene, polypyridine, cellulose, starch, protein, epoxy resin, phenol resin, derivatives of the above-noted materials, crosslinked compounds of the above-noted materials, or copolymers of the above-noted materials.

The base layer E may further include an additive. The additive may include at least one of a metal material or an inorganic non-metallic material. For example, the metal material additive may include at least one of aluminum, aluminum alloy, copper, copper alloys, nickel, nickel alloys, titanium, titanium alloys, iron, iron alloys, silver, or silver alloys.

The inorganic non-metallic material additive may, for example, include at least one of a carbon-based material, an aluminum oxide, a silicon dioxide, a silicon nitride, a silicon carbide, a boron nitride, a silicate, or a titanium oxide, for example, at least one of a glass material, a ceramic material, and a ceramic composite material. The carbon-based material additive may, for example, include at least one of graphite, superconducting carbon, acetylene black, carbon black, Ketjen black, carbon dots, carbon nanotubes, graphene, or carbon nanofibers.

The additive may further include a carbon-based material applied by the metal material. For example, it may be at least one of graphite powder applied by nickel and carbon fibers applied by the nickel

The first conductive layer F1 and the second conductive layer F2 may include aluminum. In detail, the first conductive layer F1 and the second conductive layer F2 may include at least one of a metal material, a carbon-based conductive material, and a conductive polymer material.

The above-noted substrate 201 may include a current collector 201a and an uncoated region 201b with respect to external shapes.

The active material layer 202 may be applied to at least one surface of the current collector 201a. The current collector 201a may, for example, be a quadrangular plate shape. For example, as shown in FIG. 3, the active material layer 202 may be applied to portions excluding an edge region of the current collector 201a. While the active material layer 202 may not be applied to the edge region of the current collector 201a according to exemplary embodiments such as the embodiment shown in FIG. 3, in alternate embodiments, the active material layer 202 may be applied to the entire current collector 201a.

The uncoated region 201b may extend to the outside from the current collector 201a. The uncoated region 201b may, for example, have a ribbon shape.

The electrode plates 210 and 220 may include the first electrode plate 210 and the second electrode plate 220, and the adjacent uncoated regions 201b of the substrates 201 of the electrode plates 210 and 220 may be combined in the top-down direction.

As noted, if the electrode assembly 200 is a stacking type, the first electrode plate 210 and the second electrode plate 220 may be alternately stacked with the separator 230 therebetween. There may be multiple first electrode plates 210 and second electrode plates 220.

Three first electrode plates 210 and three second electrode plates 220 are shown in a stacked arrangement in FIG. 2. This exemplary illustration is not intended to limit the number of the first electrode plates 210 and the second electrode plates 220 in a given rechargeable battery 100.

The uncoated regions 201b of the first electrode plate 210 may be disposed in parallel in the top-down direction, and the uncoated regions 201b of the second electrode plate 220 may be disposed in parallel in the top-down direction. Although not shown in the drawing, the uncoated region 201b of the first electrode plate 210 may be spaced from the uncoated region 201b of the second electrode plate 220 in a lateral direction. For example, in FIG. 2, uncoated regions 201b of the second electrode plate 220 are shown and uncoated regions 201b of the first electrode plate 210 may be in front of or behind the uncoated regions 201b of the second electrode plate 220 according to the cross-sectional view.

The uncoated regions 201b of the first electrode plates 210 and the uncoated regions 201b of the second electrode plates 220 may be respectively combined to each other by welding. For example, the uncoated regions 201b may be collected together and may be combined to each other by a welding method such as laser beams, resistance welding, and ultrasonic welding.

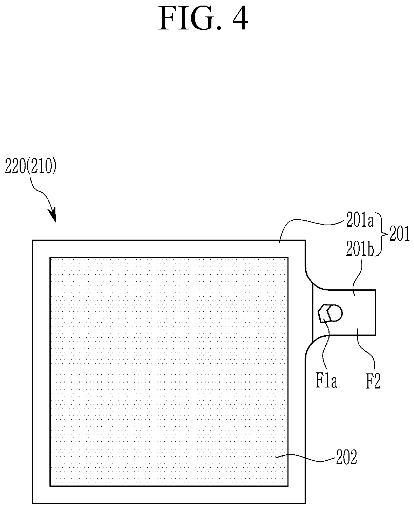

FIG. 4 shows an opposite surface of the electrode plate 201/220 shown in FIG. 3 (i.e., bottom view relative to FIG. 3).

In the electrode assembly 200 according to embodiments illustrated in FIG. 3 and FIG. 4, an incision F1a incised from a portion of the first conductive layer F1 may penetrate the base layer E and may be contacted with the second conductive layer F2. Hence, the first conductive layer F1 may be electrically connected to the second conductive layer F2.

According to the description, if the substrates 201 of the second electrode plates 220 are combined to each other (at the uncoated regions 201b, as shown in FIG. 2, for example), the second electrode plates 220 may be electrically connected to each other based on the incisions F1a. Similarly, if the substrates 201 of the first electrode plates 210 are combined to each other (at the uncoated regions 201b), the first electrode plates 210 may be electrically connected to each other based on the incisions F1a.

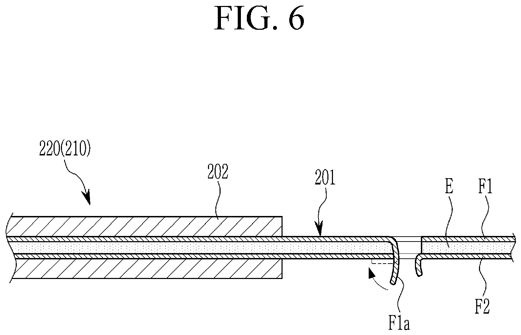

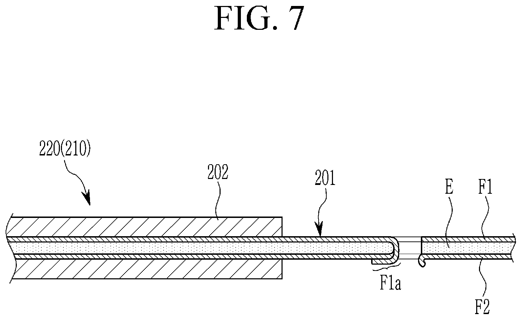

FIGs. 5-7 illustrate aspects of a manufacturing process for the electrode assembly 200 according to one or more embodiments. FIG. 5 shows a cross-sectional view of an exemplary process involved in manufacturing an electrode plate 210/220 using perforation equipment T1. FIG. 6 shows a cross-sectional view showing a portion of a first conductive layer that is incised and a base layer that is perforated by the perforation equipment T1. FIG. 7 shows a cross-sectional view in which a perforated portion of the first conductive layer F1 is contacted with the second conductive layer F2 based on the perforation.

As indicated in FIG. 5, the perforation equipment T1 may include a pin P1 and a support portion S. As shown, a side of the substrate 201 (e.g., second conductive layer F2 of uncoated region 201b) may be provided on the support portion S of the perforation equipment T1. The pin P1 of the perforation equipment T1 may sequentially penetrate the first conductive layer F1 of the substrate 201, the base layer E, and the second conductive layer F2. The pin P1 of the perforation equipment T1 may be received in the support portion S during the perforation process.

As shown in FIG. 6, a portion of the first conductive layer F1 may be incised. The incised portion may be the incision F1a. The incision F1a may penetrate the perforated base layer E.

Finally, as shown in FIG. 7, a perforated portion of the first conductive layer F1 resulting from the incision F1a may be bent by an additional jig (not shown) and may be combined to the second conductive layer F2.

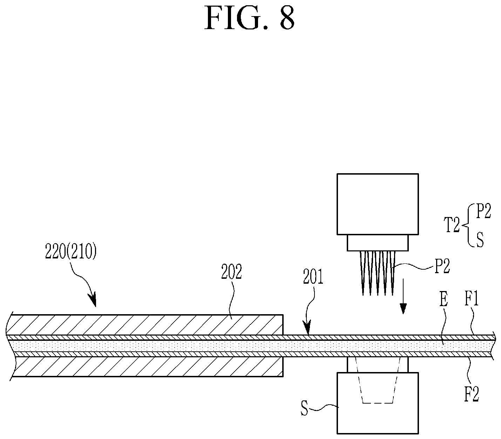

FIG. 8 shows a cross-sectional view involving a process for manufacturing an electrode plate 210/220, according to one or more embodiments, by using perforation equipment T2 having a different form from the perforation equipment T1 shown in FIG. 5.

Referring to FIG. 8, the substrate 201 may be perforated by the perforation equipment T2 that includes a fine pin P2. Based on the shape of the pin P2, there may be multiple incisions F1a in first conductive layer F1 and multiple perforated portions of the first conductive layer F1 based on the multiple incisions F1a. The incisions F1a may penetrate the base layer E and the perforated portions of the first conductive layer F1 resulting from the incisions F1a may be combined to the second conductive layer F2.

According to the arrangement shown in FIG. 2, the substrates 201 manufactured according to embodiments discussed with reference to FIGs. 3-8 may be repeatedly stacked, and the uncoated regions 201b of the substrates 201 may be welded by a welding horn used in ultrasonic welding. A welded portion of the uncoated regions 201b may be spaced from the incision F1a by a predetermined distance, which is not limited thereto. The substrates 201 are not limited to be combined to each other by ultrasonic welding. As noted, the uncoated regions 201b of the first electrode plates 210 may be connected (e.g., welded) and the uncoated portions 201b of the second electrode plates 220 may be connected (e.g., welded) laterally separated from the uncoated regions 201b of the first electrode plats 210.

In conventional rechargeable batteries including a resin metal composite substrate, there may be a problem of contacting only one side of the metal layer if the uncoated region of the electrode is welded. A prior approach to this includes a process for electrically conducting the metal layers, which can complicate the manufacturing processes.

In the electrode assembly 200 manufactured according to one or more embodiments detailed herein, the incision F1a of the first conductive layer F1 facilitates combining an incised portion of the first conductive layer F1 to the second conductive layer F2. Therefore, the respective sides of the substrate 201 may be electrically connected to each other so the electrode plates 210 and 220 may be respectively electrically connected by a general welding process even without a need for a separate electrical conducting process.

The electrode assembly 200 according to some embodiments may not require performing an electrical conducting process for additionally folding the foils and inserting them between the electrode plates one by one, as in prior approaches. As a result, the manufacturing time may be shortened and the manufacturing cost may also be reduced.

It is to be understood that the disclosure is not limited to only the embodiments detailed herein, but is also intended to cover various modifications and equivalent arrangements included within the spirit of the present disclosure and the equivalent scope of the appended claims.

## Claims

1. An electrode plate comprising:
a substrate (201) including a base layer and a first conductive layer (F1) and a second conductive layer (F2) disposed on respective surfaces of the base layer (E); and
an active material layer (202) disposed on at least one surface of the substrate,
wherein at least one incised portion of the first conductive layer, resulting from incision (F1a) of a portion of the first conductive layer that penetrates the base layer, is contacted with the second conductive layer.

2. The electrode plate of claim 1, wherein
the substrate includes
a current collector (201a) having at least one surface on which the active material layer is disposed, and
an uncoated region (201b), in which the incision is disposed, extending from the current collector.

3. The electrode plate of claim 1 or 2, wherein
the incision is disposed near the current collector in the uncoated region.

4. The electrode plate of any one of claims 1 to 3, wherein
the base layer includes at least one of polyethylene terephthalate (PET), polyamide, polyimide, polybutylene terephthalate, polyethylene naphthalate, polycarbonate, polyethylene, polypropylene, polyethylene propylene, acrylonitrile-butadiene-styrene copolymer, polyvinyl alcohol, polystyrene, poly vinyl chloride, polyvinylidene fluoride, polytetrafluoroethylene, polystyrene sulfonate sodium, polyacetylene, silicon rubber, polyoxymethylene, polyphenylene ether, polyphenylene sulfide, polyethylene glycol, poly(sulfur nitride), polyphenylene, polypyrrole, polyaniline, polythiophene, polypyridine, cellulose, starch, protein, epoxy resin, phenol resin, derivatives thereof, crosslinked compounds thereof, and copolymers thereof, and wherein the base layer preferably includes polyethylene terephthalate (PET).

5. The electrode plate of any one of claims 1 to 4, wherein
the base layer further includes an additive, and the additive includes at least one of a metal material or an inorganic non-metallic material.

6. The electrode plate of any one of claims 1 to 5, wherein
the first conductive layer and the second conductive layer include
(a) aluminum, or
(b) at least one of a metal material, a carbon-based conductive material, and a conductive polymer material.

7. An electrode assembly comprising:
electrode plates and a separator (230), wherein the electrode plates are stacked with the separator therebetween;
the electrode plates respectively include:
a substrate (201) including a base layer (E) and a first conductive layer (F1) and a second conductive layer (F2) disposed on respective sides of the base layer, and
an active material layer (202) disposed on a portion of the substrate, and
at least one incision (F1a) in a portion of the first conductive layer that penetrates the base layer, wherein an incised portion of the first conductive layer resulting from the incision is contacted with the second conductive layer.

8. The electrode assembly of claim 7, wherein
the substrate includes
a current collector (201a) having at least one surface on which the active material layer is disposed, and
an uncoated region (201b), in which the incision is disposed, extending to an outside from the current collector.

9. The electrode assembly of claim 7 or 8, wherein
the incision is disposed near the current collector in the uncoated region.

10. The electrode assembly of any one of claims 7 to 9, wherein
the electrode plates include a first electrode plate and a second electrode plate.

11. The electrode assembly of any one of claims 7 to 10, wherein the electrode plates include two or more of the first electrode plates and two or more of the second electrode plates, and uncoated regions of the two or more of the first electrode plates and the two or more of the second electrode plates are respectively combined to each other in a top-down direction.

12. The electrode assembly of any one of claims 7 to 11, wherein
the base layer includes at least one of polyethylene terephthalate (PET), polyamide, polyimide, polybutylene terephthalate, polyethylene naphthalate, polycarbonate, polyethylene, polypropylene, polyethylene propylene, acrylonitrile-butadiene-styrene copolymer, polyvinyl alcohol, polystyrene, polyvinyl chloride, polyvinylidene fluoride, polytetrafluoroethylene, polystyrene sulfonate sodium, polyacetylene, silicon rubber, polyoxymethylene, polyphenylene ether, polyphenylene sulfide, polyethylene glycol, poly(sulfur nitride), polyphenylene, polypyrrole, polyaniline, polythiophene, polypyridine, cellulose, starch, protein, epoxy resin, phenol resin, derivatives of the above-noted materials, crosslinked compounds of the above-noted materials, and copolymers of the above-noted materials, and wherein the base layer preferably includes polyethylene terephthalate (PET).

13. The electrode assembly of any one of claims 7 to 12, wherein the base layer further includes an additive, and the additive includes at least one of a metal material and an inorganic non-metallic material.

14. The electrode assembly of any one of claims 7 to 13, wherein the first conductive layer and the second conductive layer include
(a) aluminum, or
(b) at least one of a metal material, a carbon-based conductive material, and a conductive polymer material.

15. A rechargeable battery comprising:
the electrode assembly of any one of claims 7 to 14; and
a case for receiving the electrode assembly.
